# DEMANDE DE BREVET EUROPEEN

(11) **EP 4 531 177 A1**
(43) Date de publication de la demande: **02.04.2025**
(21) Numéro de dépôt: 23306610.9
(22) Date de dépôt: 27.09.2023
(51) Int. Cl.: H01M 50/204, H01M 50/209, H01M 50/262, H01M 50/271

(54) **BOITIER DE BATTERIE ELECTRIQUE ET PROCEDE D'ASSEMBLAGE ASSOCIE**

(71) Demandeur: Automotive Cells Company SE, 33520 Bruges (FR)
(72) Inventeur: BAYLAC, Johan, 33800 BORDEAUX (FR); LAPORTE, Remy, 33440 Ambares et la-grave (FR); DE SILVA, Teddy, 33200 Bordeaux (FR); SIMONIN, Antoine, 33700 Merignac (FR)
(74) Mandataire: Alatis

(57) **Abrégé**

Un boîtier d'une batterie électrique (10), le boîtier (10) comprend deux composants (14, 16), à savoir un support (16) pour un ensemble de cellules prismatiques (12), et un couvercle (14) destiné à recouvrir l'ensemble de cellules prismatiques (12). Le système de verrouillage comporte un levier (48) fixé sur un premier des deux composants (16) et guidé en rotation par rapport au premier des deux composants (16) entre une position de verrouillage et une position de déverrouillage et qui, en position de verrouillage, est déformé élastiquement pour se coincer dans des moyens d'accrochage (34) solidaires du premier des deux composants (16), et venir en appui contre une surface (28) du deuxième des deux composants (14), assurant la solidarisation des deux composants (14, 16).

## Description

### DOMAINE TECHNIQUE DE L'INVENTION

L'invention se rapporte à un boîtier d'un module d'une batterie électrique, notamment d'un module d'une batterie prismatique dédiée à l'alimentation en puissance de la motorisation d'un véhicule automobile électrique ou hybride, et au procédé d'assemblage associé à un tel boîtier.

### ÉTAT DE LA TECHNIQUE ANTÉRIEURE

Les véhicules automobiles à traction ou propulsion électrique ou hybride, comportent un ou plusieurs « packs de batterie » reliés à un réseau de puissance pour alimenter un ou plusieurs moteurs électriques (de traction ou de propulsion).

Le terme « pack de batterie » désigne un assemblage mécanique de plusieurs modules de batterie. Un module de batterie désigne un ensemble de cellules électrochimiques, par exemple des cellules prismatiques, reliées électriquement entre elles. Le pack de batterie comporte généralement, outre des modules, un corps abritant le ou les modules et un couvercle recouvrant le corps, le couvercle et le corps formant un boîtier rigide permettant de maintenir les cellules du ou des modules comprimées entre elles et de les protéger des éléments extérieurs. Pour fermer le boîtier de façon hermétique, le couvercle est généralement vissé ou collé au corps.

Ainsi, dans le document CN212934743U est présenté un pack de batterie composé d'un couvercle supérieur, d'une coque agencée en bas du couvercle supérieur, d'une unité de batterie agencée dans la coque, d'une pluralité de deuxièmes plaques de liaison disposées aux deux extrémités du dessus de la coque, et d'une pluralité de premières plaques de liaison disposées aux deux extrémités du fond du couvercle supérieur. Un bloc de connexion est disposé au bas de chaque première plaque de connexion, une colonne d'insertion est disposée au bas de chaque bloc de connexion, une rainure de connexion est formée dans chaque deuxième plaque de connexion et adaptée au bloc de connexion correspondant dans un mode d'insertion, un deuxième trou de vis transversal est formé dans chaque deuxième plaque de connexion, et un troisième trou de vis transversal est formé dans la paroi latérale de chaque rainure de connexion. Chaque bloc de connexion est pourvu d'un premier trou de vis transversal, et après avoir inséré couvercle supérieur à la rainure de connexion dans la deuxième plaque de connexion à travers le bloc de connexion et la colonne d'insertion au bas de la première plaque de connexion, le couvercle supérieur est fixé avec les trous de vis à l'aide de boulons de verrouillage, de sorte que l'effet de connexion et de fixation du corps du couvercle supérieur soit obtenu.

Cependant, lors d'un assemblage à la chaîne de packs de batterie, connecter les éléments de raccordement, réaliser les trous traversants puis visser les boulons de verrouillage peuvent être des opérations longues et fastidieuses qui ralentissent la production. De plus, la présence de deux systèmes de verrouillage (par complémentarité de formes et par vissage) peut compliquer le démontage du pack de batterie.

### EXPOSÉ DE L'INVENTION

L'invention vise à remédier aux inconvénients de l'état de la technique et à proposer un boîtier de batterie dont le montage et le démontage sont simplifiés.

Pour ce faire est proposé, selon un premier aspect de l'invention, un boîtier d'une batterie électrique, le boîtier comprenant : deux composants, constitués par un support pour un ensemble de cellules prismatiques, et par un couvercle destiné à recouvrir l'ensemble de cellules prismatiques ; et un système de verrouillage mobile entre une position de verrouillage et une position de déverrouillage et assurant en position de verrouillage la solidarisation des deux composants. Le système de verrouillage du boîtier comporte un levier fixé sur un premier des deux composants et guidé en rotation par rapport au premier des deux composants entre la position de verrouillage et la position de déverrouillage et qui, en position de verrouillage, est déformé élastiquement pour se coincer dans des moyens d'accrochage solidaires du premier des deux composants, et venir en appui contre une surface du deuxième des deux composants, assurant la solidarisation des deux composants.

L'utilisation d'un système de verrouillage comprenant un levier pour solidariser les deux composants permet de s'affranchir de l'utilisation de colle et/ou de vis et de simplifier le montage et le démontage du boîtier de batterie. La durée d'assemblage des deux composants est également réduite.

L'ensemble de cellules prismatiques est un assemblage compact de cellules prismatiques reliées électriquement entre elles en série ou en parallèle, l'ensemble formant un parallélépipède rectangle.

Suivant un mode de revendication, le couvercle présente au moins une paroi de fond située en face et à distance du support et deux parois latérales faisant saillie depuis la paroi de fond et venant au contact du support. Le cas échéant, le support peut comporter une plaque plane de dimensions supérieures à la base rectangle de l'ensemble de cellules prismatiques.

Le couvercle est dimensionné de manière à recouvrir la face supérieure de l'ensemble de cellules et au moins partiellement deux faces latérales opposées de l'ensemble de cellules.

Un tel boîtier de batterie est adaptable à une pluralité de dimensions de cellules prismatiques. En particulier, l'encombrement spatial du boîtier en position de verrouillage, est tel que :
- la distance entre la paroi de fond et le support est supérieure à 80 mm, et de préférence inférieure à 150 mm ; et/ou
- la distance entre les deux parois latérales est supérieure à 1500 mm et de préférence inférieure à 3500 mm ; et/ou
- la paroi de fond présente une largeur, mesurée parallèlement aux parois latérales, supérieure à 500 mm et de préférence inférieure à 1500 mm ; et/ou
- les deux composants en position de verrouillage délimitent un volume intérieur supérieur à 0,06 m³ et de préférence inférieur à 0,8 m³.

Selon un mode de réalisation, le levier comporte une section médiane guidée en rotation par des paliers formés sur le premier des deux composants, autour d'un axe de rotation, et au moins un bras s'étendant depuis la section médiane dans une direction radiale par rapport à l'axe de rotation. De préférence, le levier comporte deux bras parallèles, de préférence de part et d'autre de la section médiane. En position déverrouillée, le ou les bras du levier sont mobiles en rotation autour de la section médiane ; en position verrouillée, le ou les bras du levier sont insérés dans les moyens d'accrochage du premier des deux composants et la section médiane vient appuyer contre la surface du deuxième des deux composants. Les paliers sont de préférence des paliers lisses.

Les moyens d'accrochage du levier sont rapportés sur le premier des deux composants. Selon un autre mode de réalisation, les moyens d'accrochage sont directement formés sur le premier des deux composants.

Suivant un mode de réalisation, les moyens d'accrochage comportent au moins un logement formé dans le premier des deux composants. Le logement accueille et maintient en position les bras du levier lorsqu'il est verrouillé. Selon un mode de réalisation, les moyens d'accrochage contiennent quatre fixations hémicylindriques dans lesquelles est inséré le levier.

Suivant un mode de réalisation, en position de verrouillage, le levier appuie contre la surface du deuxième des deux composants en appliquant un effort de blocage prédéterminé. L'effort de blocage prédéterminé se situe de préférence entre 100 N et 1000 N. De préférence, l'effort de blocage est appliqué mécaniquement sur une station d'assemblage. Alternativement, l'effort de blocage est appliqué manuellement.

Suivant un mode de réalisation, les deux composants sont au moins en partie en matériau(x) isolant(s). Au moins le matériau du composant destiné à recouvrir l'ensemble de cellules prismatiques est un isolant électrique. De plus, les matériaux des deux composants sont aptes à résister à des pressions élevées (9 bars, soit 9.10⁵ Pa). Enfin, les matériaux des deux composants restent élastiquement déformables lorsque le boîtier est soumis à des contraintes maximales.

Suivant un mode de réalisation, le boîtier comporte un ensemble de fixation comportant un ou plusieurs éléments en saillie formés sur l'un des deux composants, venant en butée contre un ou plusieurs éléments d'arrêt formés sur l'autre des deux composants, l'ensemble de fixation maintenant les deux composants en position de verrouillage par complémentarité de forme. L'ensemble de fixation permet la rotation du composant destiné à recouvrir l'ensemble de cellules par rapport au composant servant de support à l'ensemble de cellules, dans le but de faire passer le boîtier de batterie d'une configuration ouverte à une configuration fermée avant de le verrouiller.

Suivant un mode de réalisation préféré, le ou les éléments en saillie incluent un ou plusieurs ergots de fixation et le ou les éléments d'arrêt comprennent un ou plusieurs trous complémentaires des ergots de fixation.

Suivant un autre aspect de l'invention, celle-ci a trait à un procédé d'assemblage d'un boîtier de batterie électrique tel que décrit ci-avant, comprenant au moins les étapes suivantes :
- disposer un ensemble de cellules prismatiques sur le support ;
- recouvrir l'ensemble de cellules prismatiques avec le couvercle, jusqu'à ce que les deux composants soient en contact l'un de l'autre ;
- basculer le système de verrouillage de la position de déverrouillage à la position de verrouillage pour solidariser les deux composants.

De préférence, le procédé comprend en outre, avant de basculer le système de verrouillage, l'étape suivante :
- engager le ou les éléments en saillie d'un des deux composants dans le ou les éléments d'arrêt de l'autre des deux composants.

Suivant un mode de réalisation préférentiel, le procédé d'assemblage est entièrement automatisé, ce qui permet d'accroître la vitesse de production des boîtiers. Selon un autre mode de réalisation, le procédé est partiellement ou entièrement réalisé manuellement.

### BRÈVE DESCRIPTION DES FIGURES

D'autres caractéristiques et avantages de l'invention ressortiront à la lecture de la description qui suit, en référence aux figures annexées qui suivent :
- la figure 1 illustre une vue éclatée des composants d'un boîtier de batterie selon un premier mode de réalisation ;
- la figure 2 illustre une vue d'ensemble du boîtier de batterie dans une position déverrouillée, selon le premier mode de réalisation ;
- la figure 3 illustre une vue d'ensemble du boîtier de batterie dans une position verrouillée, selon le premier mode de réalisation.

Pour plus de clarté, les éléments identiques ou similaires sont repérés par des signes de référence identiques sur l'ensemble des figures.

### DESCRIPTION DÉTAILLÉE DE MODES DE REALISATION

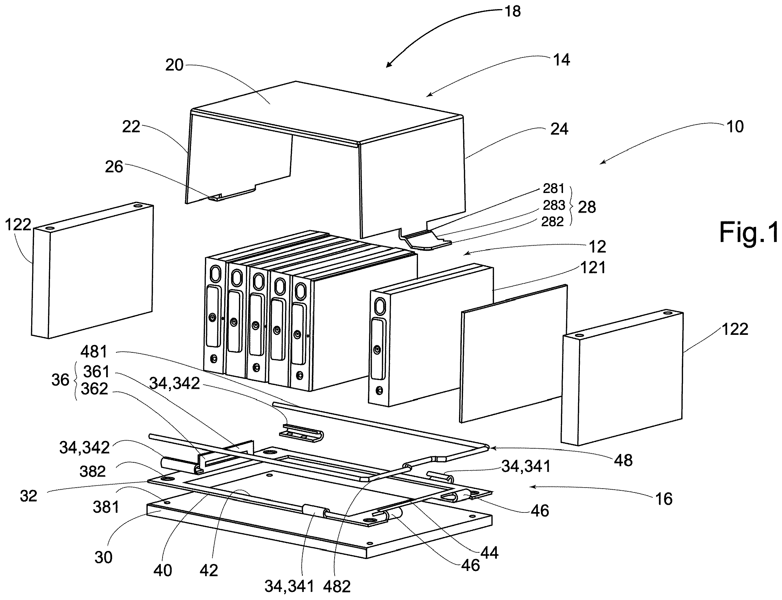

Sur la figure **1** est illustré un boîtier de batterie **10** abritant un ensemble de cellules prismatiques **12** et formé d'un premier composant **14** et d'un deuxième composant **16.**

L'ensemble de cellules prismatiques **12** est un assemblage compact en série ou en parallèle de cellules prismatiques **121** formant un parallélépipède rectangle. Aux deux extrémités longitudinales de l'ensemble de cellules se trouvent des parois de protection **122** permettant de maintenir mécaniquement l'ensemble de cellules prismatiques **12.**

Dans ce mode de réalisation, le premier composant **14** du boîtier de batterie **10** est un couvercle **18,** de préférence métallique, obtenu par exemple par pliage d'une plaque ou moulage, et destiné à recouvrir au moins partiellement l'ensemble de cellules **12.**

Suivant le mode de réalisation de la figure **1****,** le couvercle **18** est en forme de U, ouvert vers le deuxième composant **16** du boîtier **10.** Il comporte une paroi de fond **20,** reliant une première paroi latérale **22** et une deuxième paroi latérale **24.** La longueur de la paroi de fond **20** est de préférence supérieure à la longueur de la première paroi latérale **22** et à la longueur de la deuxième paroi latérale **24,** et la largeur de la paroi de fond **20** est de préférence égale à la largeur de la première paroi latérale **22** et à la largeur de la deuxième paroi latérale **24.**

La paroi de fond **20,** la première paroi latérale **22** et la deuxième paroi latérale **24** sont en matériau(x) métallique(s), par exemple en aluminium et recouvertes au moins partiellement de matériau(x) isolant(s).

La paroi de fond **20** du couvercle **18** sert à recouvrir la face supérieure de l'ensemble de cellules **12,** la première et la deuxième parois latérales (**22, 24**) du couvercle **18** étant destinées à recouvrir partiellement, les deux faces extérieures des parois de protection **122** de l'ensemble de cellules **12.**

À l'extrémité de la première paroi latérale **22** du couvercle **18** faisant face au deuxième composant **16** du boîtier **10** se trouvent des éléments en saillie **26** formés par deux ergots de fixation (**261, 262**) perpendiculaires à la paroi latérale **22** du couvercle **18.**

À l'extrémité de la deuxième paroi latérale **24** du couvercle **18** faisant face au deuxième composant **16** du boîtier **10** se trouve une surface d'appui étagée **28,** composée d'une première surface **281,** d'une deuxième surface **282** et d'une surface de liaison **283.** La première et la deuxième surface (**281, 282**) sont parallèles entre elles et perpendiculaires à la deuxième paroi latérale **24,** la surface intermédiaire **283** étant oblique et permettant de relier la première surface **281** à la deuxième surface **282.** La surface d'appui étagée **28** est plastiquement déformable.

Le deuxième composant **16** du boîtier de batterie **10** constitue un support pour l'ensemble de cellules prismatiques **12** et comporte une plaque plane **30** et un cadre **32** sur lequel sont formés/fixés des moyens d'accrochage **34** et un élément d'arrêt **36.**

La plaque plane **30** est une plaque rectangulaire, de longueur et de largeur supérieures à la longueur et à la largeur de l'ensemble de cellules prismatiques **12.** De préférence, la plaque plane **30** est revêtue d'un isolant électrique. Aux quatre extrémités de la plaque plane sont percés des trous taraudés **381.**

Le cadre **32** du deuxième composant **16** est obtenu par emboutissage. Il comporte une enveloppe extérieure **40** et un trou **42** percé en son centre. Le trou **42** est traversant et rectangulaire, de longueur et de largeur égales aux longueur et largeur de l'ensemble de cellules prismatiques **12.** L'enveloppe extérieure **40** est formée de deux longueurs égales aux longueurs de la plaque plane **30** et comportant chacune un flanc de matière **341** orienté vers l'extérieur du trou **42,** d'une largeur égale à la largeur de la plaque plane **30** et d'une largeur comportant un retrait de matière **44** rectangulaire orienté vers le trou traversant rectangulaire **42.** Aux extrémités du retrait de matière **44,** la matière du cadre **32** est déformée de manière à obtenir deux paliers de guidage ouverts **46,** l'ouverture étant orientée vers le trou traversant rectangulaire **42.** Aux quatre extrémités du cadre sont percés des trous de passages **382** alignés avec les trous taraudés **381** de la plaque plane **40** et permettant le vissage du cadre **32** à la plaque **40.**

Selon le mode de réalisation représenté, les moyens d'accrochage **34** sont formés sur les deux longueurs de l'enveloppe extérieure **40** du cadre **32,** les moyens d'accrochage **34** comportant deux accroches **341** formées par la déformation des deux flancs de matière, et deux encoches **342** usinées à part et rapportées sur le cadre **32.**

Sur la largeur du cadre **32** faisant face à la largeur comportant le retrait de matière **44** est rapporté l'élément d'arrêt **36.** Selon le mode de réalisation de la figure **1****,** l'élément d'arrêt **36** est une lamelle rectangulaire **361** comportant une lumière **362** (trou d'insertion) en son centre.

Enfin, le boîtier de batterie **10** comporte un levier **48** comportant deux bras perpendiculaires **481** reliés par une section médiane **482.** La section médiane **482** du levier **48** est insérée dans les paliers de guidage **46** du cadre **32** du deuxième composant **16,** de manière à rendre le levier **48** mobile en rotation autour de la section médiane **482,** et à faire passer le boîtier de batterie **10** d'une position déverrouillée à une position verrouillée.

La section médiane **482** du levier est déformée en son centre pour former une proéminence, de sorte qu'en position déverrouillée, la proéminence est à distance de la surface d'appui étagée **28,** et qu'en position verrouillée, la paroi proéminente exerce une pression sur la surface d'appui **28,** en particulier sur la surface intermédiaire **283** de la surface d'appui **28** pour garantir le verrouillage hermétique du boîtier **10.**

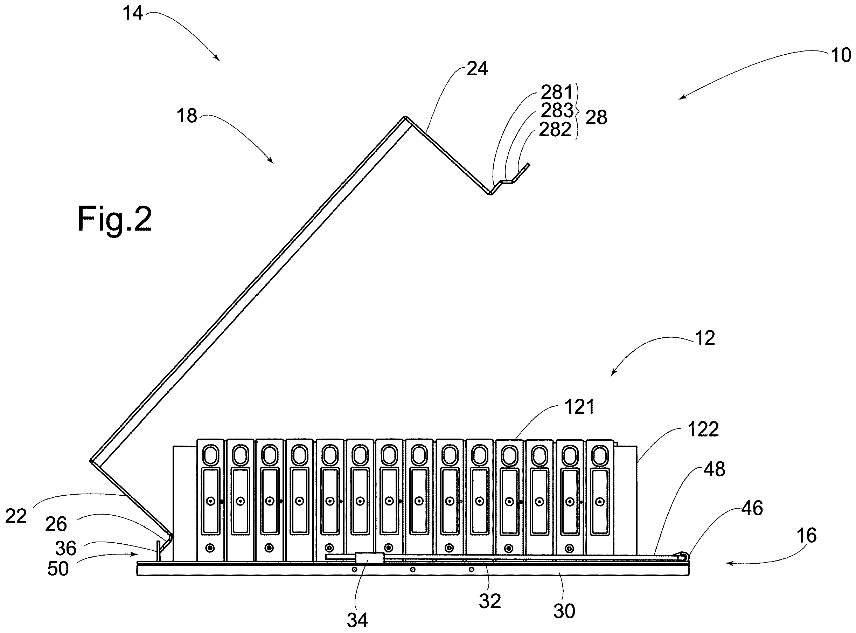

La figure **2** représente le boîtier de batterie **10** dans une position déverrouillée. Le premier et le deuxième composants (**14, 16**) sont maintenus en contact à l'aide d'un élément de fixation **50,** l'élément de fixation étant formé par l'engagement des ergots de fixation (**261, 262**) du premier composant **14** dans une lumière **362** du deuxième composant **16.** L'élément de fixation **50** permet la rotation du premier composant **14** par rapport au deuxième composant **16.**

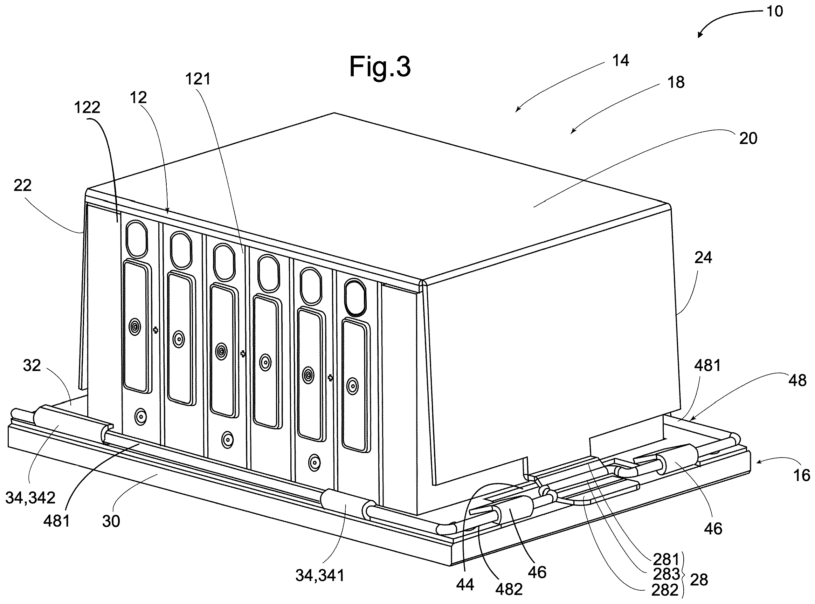

Sur la figure **3** est représenté le boîtier de batterie **10** dans une configuration verrouillée. Dans cette configuration, les deux composants (**14, 16**) sont fixés d'un côté par l'élément de fixation **50,** et de l'autre par le verrouillage du levier **48.** Les bras du levier **481** engagés dans les moyens d'accrochage **34** du deuxième composant **16** et la section médiane **482** du levier déforment élastiquement la surface d'appui **28** du deuxième composant **16.** La pression appliquée par le levier **48** sur la surface d'appui **28** induit une courbure concave de la paroi de fond **20** du couvercle **18** du premier composant **14.** Le déplacement maximal de la paroi de fond **20** du couvercle **18** est situé en son centre et reste inférieur à la limite élastique.

Suivant un mode de réalisation non représenté, l'élément de fixation **50** du boîtier **10** comporte un élément en saillie **26** solidaire du deuxième composant **16** et s'engageant dans un élément d'arrêt **36** fixé sur le premier composant **14.** Suivant un autre mode de réalisation, l'élément de fixation **50** est formé par un élément en saillie **26** du premier composant **14** s'engageant dans un élément en saillie **26** du deuxième composant **16,** par exemple un premier crochet fixé sur le premier composant **14** s'engageant dans un deuxième crochet perpendiculaire au premier crochet et fixé sur le deuxième composant **16.**

Suivant un mode de réalisation non représenté, tous les moyens d'accrochage **34** sont formés directement sur le cadre **32** du deuxième composant **16,** les moyens d'accrochage **34** étant obtenus par la déformation de flancs de matière **341** du cadre **32.** Suivant un autre mode de réalisation non représenté, les moyens d'accrochage **34** et l'élément d'arrêt **36** sont rapportés directement sur la plaque **30** du deuxième composant **16,** le deuxième composant **16** ne comportant pas de cadre **32.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Suivant une variante non illustrée, les éléments en saillie **26** et la surface d'appui **28** sont formés sur le deuxième composant **16,** et les moyens d'accrochage **34,** l'élément d'arrêt **36** et les paliers de guidage **46** sont fixés sur le premier composant **14.** Suivant cette même variante, le levier **48** est inséré sur le premier composant **14** et vient en contact de la surface d'appui **28** du deuxième composant **16.** Les différents modes de réalisation énoncés plus haut sont également transposables à cette variante.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Boîtier d'une batterie électrique (10), le boîtier (10) comprenant :
- deux composants (14, 16), constitués par un support (16) pour un ensemble de cellules prismatiques (12), et par un couvercle (14) destiné à recouvrir l'ensemble de cellules prismatiques (12) ;
- un système de verrouillage mobile entre une position de verrouillage et une position de déverrouillage et assurant en position de verrouillage la solidarisation des deux composants (14, 16) ;
le boîtier (10) étant **caractérisé en ce que** le système de verrouillage comporte un levier (48) fixé sur un premier des deux composants (16) et guidé en rotation par rapport au premier des deux composants (16) entre la position de verrouillage et la position de déverrouillage et qui, en position de verrouillage, est déformé élastiquement pour se coincer dans des moyens d'accrochage (34) solidaires du premier des deux composants (16), et venir en appui contre une surface (28) du deuxième des deux composants (14), assurant la solidarisation des deux composants (14, 16).

2. Boîtier de batterie électrique (10), selon la revendication 1, **caractérisé en ce que** le couvercle (14) présente au moins une paroi de fond (20) située en face et à distance du support (16) et deux parois latérales (22, 24) faisant saillie depuis la paroi de fond (20) et venant au contact du support (16).

3. Boîtier de batterie électrique (10), selon l'une quelconque des revendications précédentes, **caractérisé en ce que** le levier (48) comporte une section médiane (482) guidée en rotation par des paliers (46) formés sur le premier des deux composants (16), autour d'un axe de rotation (A), et au moins un bras (481) s'étendant depuis la section médiane (482) dans une direction radiale par rapport à l'axe de rotation (A).

4. Boîtier de batterie électrique (10), selon l'une quelconque des revendications précédentes, **caractérisé en ce que** les moyens d'accrochage (34) comportent au moins un logement formé dans le premier des deux composants (16).

5. Boîtier de batterie électrique, (10) selon l'une quelconque des revendications précédentes, **caractérisé en ce qu'**en position de verrouillage, le levier (48) appuie contre la surface (28) du deuxième des deux composants (14) en appliquant un effort de blocage prédéterminé.

6. Boîtier de batterie électrique (10), selon l'une quelconque des revendications précédentes, **caractérisé en ce que** les deux composants (14, 16) sont au moins en partie en matériau(x) isolant(s).

7. Boîtier de batterie électrique (10), selon l'une quelconque des revendications précédentes, **caractérisé en ce qu'**il comporte un ensemble de fixation (50) comportant un ou plusieurs éléments en saillie (26) formés sur l'un des deux composants (14, 16), venant en butée contre un ou plusieurs éléments d'arrêt (36) formés sur l'autre des deux composants (14, 16), l'ensemble de fixation (50) maintenant les deux composants (14, 16) en position de verrouillage par complémentarité de forme.

8. Boîtier de batterie électrique (10), selon la revendication 7, **caractérisé en ce que** le ou les éléments en saillie (26) incluent un ou plusieurs ergots de fixation (261, 262) et le ou les éléments d'arrêt (36) comprennent un ou plusieurs trous (362) complémentaires des ergots de fixation (261, 262).

9. Procédé d'assemblage d'un boîtier de batterie électrique (10) selon l'une quelconque des revendications précédentes, le procédé étant **caractérisé en ce que** qu'il comprend au moins les étapes suivantes :
- disposer un ensemble de cellules prismatiques (12) sur le support (16) ;
- recouvrir l'ensemble de cellules prismatiques (12) avec le couvercle (14), jusqu'à ce que les deux composants (14, 16) soient en contact l'un de l'autre ;
- basculer le système de verrouillage de la position de déverrouillage à la position de verrouillage pour solidariser les deux composants (14, 16).

10. Procédé selon la revendication 9 d'un boîtier de batterie électrique (10) selon l'une quelconque des revendications 7 à 8, comprenant en outre, avant de basculer le système de verrouillage, l'étape suivante :
- engager le ou les éléments en saillie (26) d'un des deux composants (14, 16) dans le ou les éléments d'arrêt (36) de l'autre des deux composants (14, 16).

## Revendications modifiées

### Revendications modifiées conformément à la règle 137(2) CBE.

1. Boîtier d'une batterie électrique (10), le boîtier (10) comprenant :
- deux composants (14, 16), constitués par un support (16) pour un ensemble de cellules prismatiques (12), et par un couvercle (14) destiné à recouvrir l'ensemble de cellules prismatiques (12) ;
- un système de verrouillage mobile entre une position de verrouillage et une position de déverrouillage et assurant en position de verrouillage la solidarisation des deux composants (14, 16) ;
le système de verrouillage comportant un levier (48) fixé sur un premier des deux composants (16) et guidé en rotation par rapport au premier des deux composants (16) entre la position de verrouillage et la position de déverrouillage et qui, en position de verrouillage, est déformé élastiquement pour se coincer dans des moyens d'accrochage (34) solidaires du premier des deux composants (16), et venir en appui contre une surface (28) du deuxième des deux composants (14), assurant la solidarisation des deux composants (14, 16), le boîtier étant **caractérisé en ce que** le couvercle (14) présente au moins une paroi de fond (20) située en face et à distance du support (16) et deux parois latérales (22, 24) faisant saillie depuis la paroi de fond (20) et venant au contact du support (16).

2. Boîtier de batterie électrique (10), selon la revendication 1, **caractérisé en ce que** le levier (48) comporte une section médiane (482) guidée en rotation par des paliers (46) formés sur le premier des deux composants (16), autour d'un axe de rotation (A), et au moins un bras (481) s'étendant depuis la section médiane (482) dans une direction radiale par rapport à l'axe de rotation (A).

3. Boîtier de batterie électrique (10), selon la revendication 1 ou 2, **caractérisé en ce que** les moyens d'accrochage (34) comportent au moins un logement formé dans le premier des deux composants (16).

4. Boîtier de batterie électrique, (10) selon l'une quelconque des revendications précédentes, **caractérisé en ce qu'**en position de verrouillage, le levier (48) appuie contre la surface (28) du deuxième des deux composants (14) en appliquant un effort de blocage prédéterminé.

5. Boîtier de batterie électrique (10), selon l'une quelconque des revendications précédentes, **caractérisé en ce que** les deux composants (14, 16) sont au moins en partie en matériau(x) isolant(s).

6. Boîtier de batterie électrique (10), selon l'une quelconque des revendications précédentes, **caractérisé en ce qu'**il comporte un ensemble de fixation (50) comportant un ou plusieurs éléments en saillie (26) formés sur l'un des deux composants (14, 16), venant en butée contre un ou plusieurs éléments d'arrêt (36) formés sur l'autre des deux composants (14, 16), l'ensemble de fixation (50) maintenant les deux composants (14, 16) en position de verrouillage par complémentarité de forme.

7. Boîtier de batterie électrique (10), selon la revendication 6, **caractérisé en ce que** le ou les éléments en saillie (26) incluent un ou plusieurs ergots de fixation (261, 262) et le ou les éléments d'arrêt (36) comprennent un ou plusieurs trous (362) complémentaires des ergots de fixation (261, 262).

8. Procédé d'assemblage d'un boîtier de batterie électrique (10) selon l'une quelconque des revendications précédentes, le procédé étant **caractérisé en ce qu'**il comprend au moins les étapes suivantes :
- disposer un ensemble de cellules prismatiques (12) sur le support (16) ;
- recouvrir l'ensemble de cellules prismatiques (12) avec le couvercle (14), jusqu'à ce que les deux composants (14, 16) soient en contact l'un de l'autre ;
- basculer le système de verrouillage de la position de déverrouillage à la position de verrouillage pour solidariser les deux composants (14, 16).

9. Procédé selon la revendication 8 d'un boîtier de batterie électrique (10) selon l'une quelconque des revendications 6 à 7, comprenant en outre, avant de basculer le système de verrouillage, l'étape suivante :
- engager le ou les éléments en saillie (26) d'un des deux composants (14, 16) dans le ou les éléments d'arrêt (36) de l'autre des deux composants (14, 16).
